Europäisches Patentamt

European Patent Office

Office européen des brevets

(19)

(11) Numéro de publication : **0 676 649 A1**

# (12) DEMANDE DE BREVET EUROPEEN

(21) Numéro de dépôt : **95400747.2**

(22) Date de dépôt : **04.04.95**

(51) Int. Cl.⁶ : **G01S 13/24**

(30) Priorité : **05.04.94 FR 9403963**

(43) Date de publication de la demande :
**11.10.95 Bulletin 95/41**

(84) Etats contractants désignés :
**DE DK FR GB IT NL SE**

(71) Demandeur : **THOMSON-CSF**
**173, Boulevard Haussmann**
**F-75008 Paris (FR)**

(72) Inventeur : **Brendle, Jean-Claude**
**Thomson-CSF,**
**SCPI,**
**B.P. 329**
**F-92402 Courbevoie Cedex (FR)**
Inventeur : **Cornic, Pascal**
**Thomson-CSF,**
**SCPI,**
**B.P. 329**
**F-92402 Courbevoie Cedex (FR)**
Inventeur : **Crenn, Patrice**
**Thomson-CSF,**
**SCPI,**
**B.P. 329**
**F-92402 Courbevoie Cedex (FR)**

(74) Mandataire : **Beylot, Jacques et al**
**Thomson-CSF**
**SCPI**
**B.P. 329**
**F-92402 COURBEVOIE CEDEX (FR)**

(54) **Procédé et dispositif radar de mesure de distance.**

(57) La présente invention concerne un procédé de mesure, à l'aide d'un radar, de la distance d'un obstacle utile qui est entouré d'obstacles parasites mais qui retourne un écho plus puissant qu'eux. Ce procédé de mesure peut s'appliquer à la mesure du niveau d'un liquide dans une cuve. Il consiste à émettre une suite de signaux hyperfréquences non modulés dont les pulsations discrètes sont réparties dans une certaine bande de fréquence, à démoduler les signaux reçus en retour par les signaux émis et à soumettre les signaux reçus et démodulés à une transformation de Fourier inverse et discrète en vue d'une localisation grossière du retard de l'écho de l'obstacle utile et à une méthode haute résolution pour la localisation de sources rayonnantes en vue d'un affinage de la localisation du retard de l'écho de l'obstacle utile, ledit retard permettant d'apprécier la distance de l'obstacle utile au radar.

FIG.5

EP 0 676 649 A1

La présente invention concerne la mesure précise de courtes distances à l'aide d'un radar et, notamment, la mesure d'un niveau de liquide dans une cuve en présence de réflexions parasites.

Une méthode connue pour mesurer un niveau de liquide dans une cuve, à l'aide d'un radar, consiste à placer le radar au dessus de la cuve, à la verticale de la surface du liquide et à lui faire émettre une suite de signaux sinusoïdaux hyperfréquences non modulés $s_k$ dont les pulsations discrètes sont régulièrement réparties dans une bande de fréquence B où le coefficient de réflexion de la surface du liquide ne varie pas de façon notable.

$$s_k = u\exp[j(w_0 + k\Delta w)t]$$

$u$ étant un coefficient d'amplitude, $w_0$ la pulsation initiale, $\Delta w$ le changement de pulsation au passage d'un signal à l'autre, $t$ la variable temps et $k$ un entier positif variant entre 0 et N-1, N étant le nombre d'éléments d'une suite de signaux.

Les signaux reçus par le radar provenant de la réflexion des signaux émis par la surface du liquide et par différents obstacles parasites sont démodulés par les signaux émis et donnent lieu, en bande de base, à des signaux $r_k$ de la forme :

$$r_k = \sum_{i=0}^{M-1} v_i \exp\left[-j\left(w_0 + k\,\Delta w\right)\tau_i\right] \qquad k\,\varepsilon\left[0, N-1\right]$$

M étant un entier représentant le nombre d'obstacles retournant des échos que ce soit par le lobe principal ou par les lobes secondaires du radar, $i$ un entier positif variant de 0 à M-1, $v_i$ un coefficient d'amplitude dépendant du coefficient de réflexion du $i^{\text{ème}}$ obstacle, et $\tau_i$ le temps mis par le signal émis pour aller du radar au $i^{\text{ème}}$ obstacle et en revenir, l'obstacle d'indice 0 étant la surface du liquide.

L'ensemble des signaux $\{r_k\}$ échantillonne dans le domaine des fréquences une fonction résultant d'une sommation d'ondes sinusoïdales dont les périodicités dépendent des $\tau_i$ et donc des distances $d_i$ aux différents obstacles puisque :

$$\tau_i = 2d_i/c$$

$c$ étant la vitesse de propagation des ondes ($3\ 10^8$ m/s).

Pour extraire les valeurs des temps $\tau_i$ et donc connaître les distances des différents obstacles, il est habituel d'équiper la partie réception du radar d'un circuit de traitement effectuant une transformée de Fourier discrète et inverse sur l'ensemble des signaux reçus et démodulés $\{r_k\}$ qui fait passer du domaine des fréquences à celui des temps.

Les $\tau_i$ correspondent à des maxima de la fonction du temps obtenue, le maxima le plus grand correspondant à $\tau_0$ car le niveau de liquide est sensé donner l'écho le plus puissant.

Selon la formule de Woodward, la précision $\sigma$ de la mesure du délai $\tau_0$ donnant le niveau de la cuve est fonction de la bande de fréquence balayée B et du rapport signal à bruit énergétique R :

$$\sigma = \frac{1}{2\pi B\sqrt{R}}$$

Dans cette utilisation ce n'est pas, à proprement parler, une limitation car le rapport signal à bruit énergétique R varie peu avec la distance étant donné que la surface de liquide éclairée augmente avec la distance en raison de l'ouverture du cône d'éclairement du faisceau du radar, et peut être élevé en raison de la faiblesse des distances à mesurer. C'est ainsi qu'il serait théoriquement possible d'atteindre facilement une précision de l'ordre du centimètre avec une bande de fréquence balayée de l'ordre du GHz.

En fait, il existe une autre limitation due à la faiblesse de résolution d'une transformée discrète de Fourier. En effet, un filtre élémentaire en sortie d'une FFT discrète et inverse a une réponse dans le domaine temporel qui n'est pas infiniment étroite mais qui présente un lobe principal de largeur à 3 dB égale à l'inverse 1/B de la bande de fréquence balayée entouré de lobes secondaires si bien qu'il n'est pas possible de séparer deux échos l'un utile, l'autre parasite lorsqu'ils reviennent au radar en des instants séparés d'un délai inférieur à 1/B. Dans le cas d'une bande de fréquence balayée de 1 GHz, le délai est de $10^{-9}$ seconde ce qui correspond pour l'onde émise à une distance de propagation aller et retour de 15 cm. Il en résulte une imprécision de mesure de distance très supérieure à celle que laisse espérer la formule de Woodward dans ce cas précis.

Pour pallier cet inconvénient, on peut songer à remplacer la transformée de Fourier discrète et inverse par une méthode haute résolution de localisation de sources rayonnantes qui a l'avantage d'avoir un pouvoir de résolution asymptotique infini uniquement fonction du temps d'observation. Ce genre de méthode est bien connu dans la technique et est décrit, par exemple, dans l'article de Georges Bienvenu et Laurent Kopp intitulé "Méthodes haute résolution pour la localisation de sources rayonnantes" et paru dans la revue "L'onde électrique" juillet-août 1984 Vol. 6 N°4 pages 28 à 37.

Comme on le verra par la suite, la mise en oeuvre d'une méthode haute résolution de localisation de sources rayonnantes nécessite, au préalable de faire une hypothèse sur le nombre maximum d'échos utiles et parasites susceptibles d'être rencontrés. Ce nombre maximum d'échos est alors pris en compte dans la méthode qui les localise tous, qu'ils soient réels ou fictifs dans une tentative de modélisation dans laquelle les échos fictifs peuvent donner une réponse supérieure aux échos réels. il se pose alors un problème d'identification de l'écho utile parmi les échos réels et fictifs localisés par une méthode haute résolution.

La présente invention a pour but de faciliter cette identification.

Elle a pour objet un procédé de mesure de distance à l'aide d'un radar dans lequel :

- on dispose le radar de manière que l'obstacle utile dont on veut mesurer la distance retourne l'écho le plus puissant,
- on fait émettre par le radar une suite de signaux hyperfréquences non modulés $\{s_k\}$ dont les pulsations discrètes sont régulièrement réparties dans une bande de fréquence balayée B

$$s_k = u\exp[j(w_0 + k\Delta w)t]$$

u étant un coefficient d'amplitude, $w_0$ la pulsation initiale, $\Delta w$ le changement de pulsation au passage d'un signal à l'autre, $t$ la variable temps et $k$ un entier positif variant de 0 et N-1, N étant le nombre d'éléments d'une suite de signaux.
- on fait démoduler dans le radar les signaux reçus par les signaux émis pour engendrer, en bande de base, une suite de signaux $\{r_k\}$ de la forme :

$$r_k = \sum_{i=0}^{M-1} v_i \exp\left[-j(w + k\Delta w)\tau_i\right]$$

M étant un entier représentant le nombre d'obstacles retournant des échos, $i$ un entier positif variant de 0 à M-1, $v_i$ un coefficient d'amplitude dépendant du coefficient de réflexion du $i^{ème}$ obstacle, et $\tau_i$ le temps mis par le signal émis pour aller du radar au $i^{ème}$ obstacle et en revenir, l'obstacle d'indice 0 étant l'obstacle utile,
- et on traite la suite des signaux reçus $\{r_k\}$ pour en extraire la valeur du temps $\tau_0$ correspondant à l'obstacle utile dont on veut connaître la distance $d_0$ à l'aide de la relation:

$$\tau_0 = 2d_0/c$$

$c$ étant la vitesse de propagation des ondes du radar.

Ce procédé est remarquable en ce que le traitement de la suite des signaux reçus $\{r_k\}$ consiste:

- en une transformation de Fourier discrète et inverse permettant une localisation temporelle grossière de l'écho utile par sélection du filtre de sortie donnant la réponse la plus forte,
- en une mise en oeuvre d'une méthode haute résolution pour la localisation de sources rayonnantes donnant une localisation temporelle d'échos réels ou fictifs,
- en une sélection, dans la localisation temporelle d'échos fournie par la méthode haute résolution, d'une plage restreinte centrée sur le filtre de sortie sélectionné de la transformée de Fourier discrète et inverse, et
- en un choix dans ladite plage restreinte de l'écho donnant la plus forte réponse comme étant celui de l'obstacle utile dont on cherche à mesurer la distance et en une estimation de la distance $d_A$ de l'obstacle utile à partir de la relation :

$$d_A = \tau_0 \cdot c/2$$

Dans ce procédé, la transformation de Fourier discrète et inverse est utilisée pour une localisation grossière de l'écho utile tandis que la méthode haute résolution ne sert qu'à l'affinage de la position de la cible utile, dans une plage restreinte où l'on sait que se trouve un écho réel qui est l'écho utile et où, par conséquent, la modélisation fournie par la méthode haute résolution est fidèle.

Avantageusement, la méthode haute résolution utilisée est la méthode MUSIC (MUltiple SIgnal Classification).

L'invention a également pour objet un dispositif radar mettant en oeuvre le procédé précité.

D'autres avantages et caractéristiques de l'invention ressortiront de la description ci-après d'un mode de réalisation donné à titre d'exemple. Cette description sera faite en regard du dessin dans lequel :

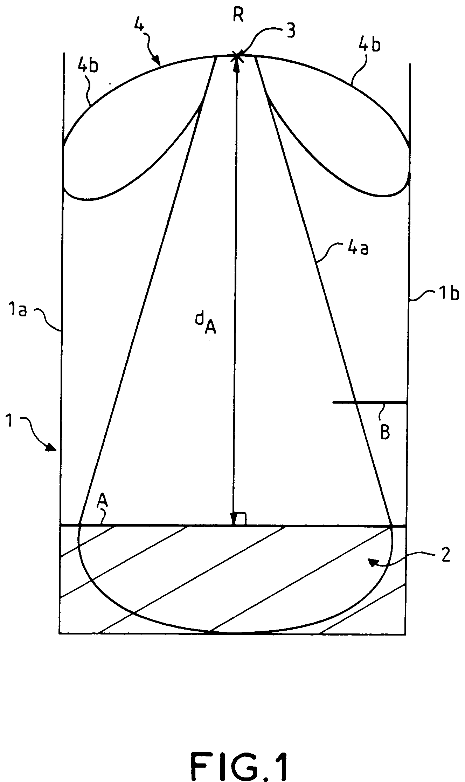

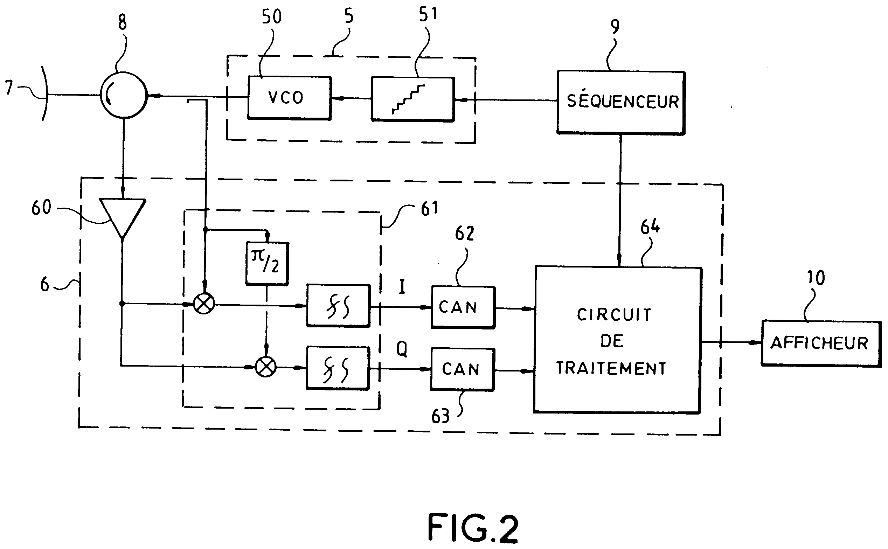

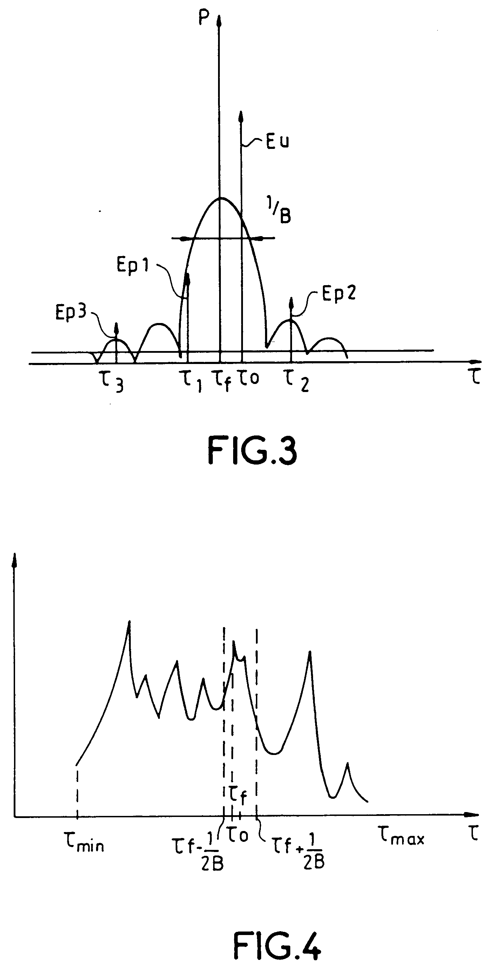

- une figure 1 illustre, de manière schématique, l'environnement d'un radar utilisé pour une mesure de niveau d'un liquide dans une cuve ;
- une figure 2 est un schéma fonctionnel d'un radar mettant en oeuvre le procédé selon l'invention;
- une figure 3 est un diagramme illustrant la largeur de la plage de réponse d'un filtre de transformée de Fourier inverse

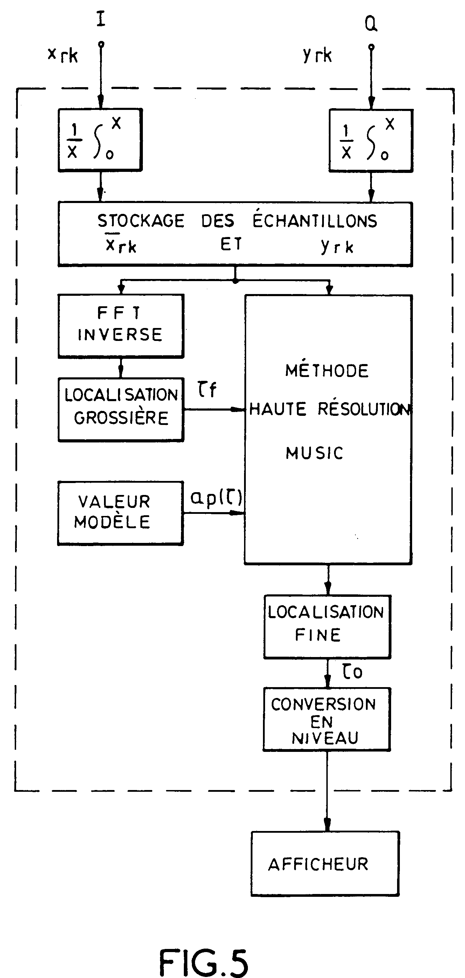

- une figure 4 est un diagramme illustrant le comportement en fonction du retard $\tau$ de la quantité à maximaliser dans une méthode haute résolution de localisation d'échos de type MUSIC ; et
- une figure 5 illustre l'architecture du circuit de traitement de la partie réception du radar de la figure 2.

La figure 1 montre la disposition d'un radar pour la mesure du niveau d'un liquide dans une cuve par exemple une citerne de pétrolier ou d'une installation de stockage d'hydrocarbure.

La cuve 1 est remplie d'un liquide 2. Ses parois intérieures 1a, 1b sont métalliques avec des éléments de structure en saillie. Le radar 3 est placé au dessus de la cuve 1 en un point R. Son diagramme d'émission et de réception présente un lobe principal 4a dont la direction de visée est normale à la surface du liquide 2 et des lobes secondaires 4b orientés vers les parois de la cuve 1.

La surface A du liquide 2 renvoie au radar 3 l'écho utile servant à mesurer la distance dA du radar à la surface du liquide et, par conséquent, le niveau de liquide dans la cuve. Avec l'écho utile, le radar reçoit une multitude d'échos parasites de puissances moindres engendrés par les parties supérieures des parois intérieures de la cuve éclairées par les lobes secondaires et par les éléments de structure en saillie au dessus du niveau du liquide tels que B. Pour mesurer le niveau du liquide, il faut donc, d'une part discriminer l'écho utile de la surface du liquide, des échos parasites qui sont d'autant plus gênants qu'ils sont proches de la surface du liquide et, d'autre part, apprécier le retard de l'écho utile qui est proportionnel à la distance séparant le radar de la surface du liquide.

Le radar 3 comporte, comme représenté à la figure 2, une partie émission 5 et une partie réception 6 couplées à une antenne 7 par l'intermédiaire d'un duplexeur 8 et cadencés par un séquenceur 9, ainsi qu'un afficheur 10.

La partie émission 5 comprend un oscillateur contrôlé en tension 50 et un générateur de rampes de tension en marches d'escalier 51. L'oscillateur contrôlé en tension 50 fournit le signal hyperfréquence d'émission du radar appliqué à l'antenne 7 par l'intermédiaire du duplexeur 8. Le générateur de rampes de tension 51 est cadencé par le séquenceur 9 et commande à l'oscillateur contrôlé en tension 50 la génération d'une suite de signaux hyperfréquence $\{s_k\}$ non modulés dont les pulsations discrètes sont régulièrement réparties dans une bande de fréquence B où le coefficient de réflexion de la surface du liquide ne varie pas de façon significative :

$$s_k(t) = u\exp[j(w_0 + k\,\Delta w)t]$$

$u$ étant un coefficient d'amplitude, $w_0$ la pulsation initiale, $\Delta w$ le changement de pulsation au passage d'un signal au suivant et $k$ un entier positif variant entre 0 et N-1, N étant le nombre de signaux de différentes fréquences engendrés par l'oscillateur contrôlé en tension 50 ou encore le nombre de marches d'escalier d'une rampe du générateur de tension 51. Dans la pratique, $w_0$ est en bande X, de l'ordre de 10 GHz, $\Delta_w$ vaut 1 MHz et N est de l'ordre du millier.

Chaque signal hyperfréquence $s_k$ émis par le radar est réfléchi par la surface du liquide et par différents obstacles parasites et revient au radar sous la forme d'un signal :

$$R_k(t) = \sum_{i\,\varepsilon 0}^{M-2} v_i \exp\left[j\left(w_0 + k\,\Delta w\right)\left(t - \tau_i\right)\right]$$

M étant un entier représentant le nombre des obstacles utiles et parasites retournant des échos par le lobe principal ou par les lobes secondaires du radar, $i$ un entier variant de 0 à M-1, $v_i$ un coefficient d'amplitude dépendant du coefficient de réflexion du $i^{ème}$ obstacle et $\tau_i$ le temps mis par le signal émis pour aller du radar au $i^{ème}$ obstacle et en revenir.

Pour traiter ce signal, le radar comporte, dans sa partie réception 6 un étage d'entrée 60 à faible bruit suivi d'un démodulateur synchrone en quadrature 61, de deux convertisseurs analogique-numérique 62, 63 disposés sur les sorties en phase I et en quadrature Q du démodulateur 61, et d'un circuit de traitement 64 analysant les échantillons numériques fournis par les convertisseurs analogique-numérique 62, 63 pour en tirer le niveau du liquide dans la cuve à destination de l'afficheur 10.

L'étage d'entrée 60 à faible bruit reçoit de l'antenne 7, par l'intermédiaire du duplexeur 8, les signaux $R_k$, les filtre de manière à limiter la bande de bruit et les amplifie pour les amener à un niveau adéquat pour leur démodulation.

Le démodulateur 61 qui reçoit, de l'oscillateur contrôlé en tension 50, le signal d'émission $s_k$ comme porteuse locale, ramène les signaux $R_k$ en bande de base et délivre sur ses sorties en phase et en quadrature les composantes I et Q de signaux $r_k$ de la forme :

$$r_k = \sum_{i=0}^{M-1} v_i \exp\left[-j(w_0 + k\,\Delta w)\,\tau_i\right] + \eta_k$$

$\eta_k$ étant un bruit Gaussien introduit par la partie réception du radar. Le circuit de traitement 64 reçoit des échantillons numériques des composantes en phase et en quadrature des signaux $r_k$ délivrés par les convertisseurs analogique-numérique 62, 63 et des signaux de synchronisation du séquenceur 9. Il commence par faire la moyenne des échantillons numériques de chaque signal $r_k$ sur la durée du signal d'émission $s_k$ de façon à améliorer le rapport signal sur bruit.

Une fois cette moyenne faite, il procède à une transformation de Fourier discrète et inverse sur l'ensemble des $\{\overline{r}_k\}$ de manière à passer du domaine des fréquences à celui des temps. Cette transformation de Fourier discrète et inverse peut s'effectuer par exemple sur 1024 points si le nombre N des signaux de différentes fréquences émis est de 1024. Elle permet de connaître grossièrement la puissance des échos en fonction de leur retard r et par conséquent de situer grossièrement le retard $\tau_0$ de l'écho à la surface du liquide qui correspond au maximum de la courbe obtenue puisque le radar est installé au dessus de la cuve de manière que l'écho le plus fort provienne de la surface du liquide.

Comme cela ressort de la figure 3, la détermination du délai r0 par la transformée de Fourier discrète et inverse est assez grossière du fait que les échos parasites proches de l'écho utile modifient la position du maximum obtenu. En effet les filtres élémentaires de transformée de Fourier discrète et inverse ont une réponse dans le domaine temporel qui n'est pas infiniment étroite mais qui présente un lobe principal de largeur à 3 dB égal à l'inverse 1/B de la bande balayée et des lobes secondaires qui vont en décroissant et finissent par se fondre avec le niveau de bruit.

Cette figure 3 illustre le cas où l'écho utile $E_u$ se produit avec un retard $\tau_0$ dans le lobe principal de la réponse d'un filtre centrée sur le retard $\tau_f$ de durée légèrement inférieure alors qu'un écho parasite $E_{p1}$ se produit avec un retard $\tau_1$ inférieur tombant également dans le lobe principal du filtre centré sur le retard $\tau_f$ et que d'autres échos parasites $E_{p2}$, $E_{p3}$ moins proches tombent dans les lobes secondaires du filtre centré sur le retard $\tau_f$. Ce filtre donne une réponse maximum pour le retard $\tau_f$ alors que le retard recherché est $\tau_0$. En présence d'échos parasites, la transformée de Fourier discrète et inverse ne permet donc pas d'apprécier dans tous les cas le retard $\tau_0$ de l'écho utile avec une précision supérieure à l'inverse 1/B de la bande de fréquence balayée. Comme on l'a vu précédemment une bande de fréquence balayée de 1 GHz donne une incertitude sur la mesure du retard de l'écho utile de l'ordre de $10^{-9}$ s qui correspond à une incertitude sur la mesure de distance de 15 cm ce qui peut être considérable pour une mesure de niveau.

Pour réduire cette incertitude d'un ordre de grandeur au moins, on fait procéder par le circuit de traitement à une localisation des échos utile et parasites par une méthode haute résolution de type MUSIC et l'on ne retient le résultat de cette localisation que dans une plage centrée sur le filtre de transformé de Fourier ayant donné la réponse maximum pour admettre que le retard $\tau_0$ de l'écho utile est le retard du plus fort écho localisé dans cette plage.

Pour cela, on construit à partir des signaux reçus démodulés et moyennés $\{\overline{r}_k\}$ un vecteur d'observation

$$X_p(k) = \begin{pmatrix} \overline{r}_k \\ \overline{r}_{k+1} \\ -- \\ -- \\ \overline{r}_{k+p-2} \\ \overline{r}_{k+p-1} \end{pmatrix}$$

dont on étudie l'évolution en fonction de la fréquence (coefficient $k$). La dimension de ce vecteur d'observation est choisie de manière à être supérieure de quatre à cinq unités au nombre maximum d'échos utiles et parasites susceptibles d'être rencontrés. Dans le cas présent de mesure de niveau dans une cuve, ce nombre est également de quatre ou cinq de sorte que la dimension $p$ du vecteur d'observation est de l'ordre de dix.

On construit ensuite l'estimée de la matrice d'autocorrélation $\hat{\Gamma}_p$ du vecteur d'observation telle que :

$$\hat{\Gamma}_p = E\left[X_p\,X_p^{t*}\right]$$

avec $X_p^{t*}$ transconjugué de $X_p$. Cette estimée de la matrice d'autocorrélation $\hat{\Gamma}_p$ est une matrice carrée de dimension $p$ ayant un terme de rangs $i,j$ défini par :

$$\hat{\Gamma}_p(i,j) = \frac{1}{N-p} \sum_{k=0}^{N-1-p} \bar{r}_{i+k} \times \bar{r}_{j+k}*$$

$*$ indiquant le terme conjugué. L'étendue de la sommation, c'est-à-dire la valeur de N-1-$p$ conditionne la qualité des estimations.

La matrice d'autocorrélation $\Gamma_p$ a des propriétés spécifiques vis-à-vis du vecteur $a(\tau)$ modélisant la réponse en fréquence d'un écho de retard $\tau$ :

$$a_p(\tau) = \begin{vmatrix} \exp\left(-\frac{1}{j}\right)\Delta \omega \tau \\ -- \\ -- \\ \exp\left(-j(p-2)\Delta \omega \tau\right) \\ \exp\left(-j(j-1)\Delta \omega \tau\right) \end{vmatrix}$$

qui permettent de résoudre le problème de localisation des échos.

- Elle est hermitienne définie positive ce qui entraîne qu'elle est diagonalisable avec des valeurs propres réelles positives et des vecteurs propres orthogonaux.
- L'espace E engendré par ses vecteurs propres peut se décomposer en deux sous-espaces orthogonaux: un sous-espace source $E_s$ défini par une base orthogonale de vecteurs propres $l_0, \cdots l_{l-1}$ correspondant aux valeurs propres de plus fortes valeurs et un sous-espace bruit $E_b$ défini par une base orthogonale des vecteurs propres restants $l_l, \cdots l_{p-1}$ correspondant aux valeurs propres de plus faibles valeurs restantes toutes égales à la puissance moyenne de bruit $\sigma^2$.
- Le sous-espace source $E_p$ a pour dimension $l$ le nombre d'échos effectivement rencontrés tandis que le sous-espace bruit $E_b$ a pour dimension $p-l$.

La localisation des échos se fait en mettant à profit le fait que la contribution en fréquence d'un écho a la forme du vecteur modèle $a_p(\tau)$ pour une valeur particulière de $\tau$ pour laquelle le vecteur modèle appartient au sous-espace source $E_s$ et est de ce fait orthogonal au sous-espace bruit $E_b$ de sorte que pour cette valeur particulière on doit avoir :

$$\sum_{j=l}^{p-1} \left| a^t(\tau) \cdot l_j \right|^2 = 0$$

Les différentes valeurs particulières de $\tau$ correspondant à des échos localisés sont alors assimilées aux valeurs de $\tau$ donnant lieu à des maxima de l'inverse de la projection du vecteur modèle dans le sous-espace bruit

$$\max \overset{-1}{G}(\tau) = \left( \sum_{j=l}^{p-1} \left| a^t(\tau) \cdot l_j \right|^2 \right)^{-1}$$

$t$ indiquant une transposition.

Le déroulement de ce processus de localisation dans lequel la matrice d'autocorrélation $\Gamma_p$ est remplacée par son estimée $\hat{\Gamma}_p$ seule accessible par les mesures est connu sous le nom de méthode haute résolution MUSIC.

En pratique, l'approximation de la matrice d'autocorrélation $\Gamma_p$ par son estimée $\hat{\Gamma}_p$ fait que la transition entre les valeurs propres du sous-espace source $E_s$ et les valeurs propres du sous-espace bruit $E_b$ est progressive au lieu d'être brutale de sorte qu'il est difficile de situer la frontière entre les deux sous-espaces si l'on ne connaît pas a priori le nombre d'échos réels rencontrés ce qui est le cas d'une mesure de niveau dans une cuve.

Pour la détermination du sous-espace bruit, on se restreint alors aux vecteurs propres correspondant aux valeurs propres faibles de l'ordre de grandeur de la puissance moyenne de bruit. Le sous-espace bruit est alors sous-estimé et le sous-espace sources surestimé. Il en résulte que l'on trouve des maxima locaux pour l'inverse de la projection du vecteur modèle dans le sous-espace bruit réduit considéré qui correspondent aux échos réels mais également à des échos fictifs. Comme les maxima trouvés pour les échos fictifs peuvent être supérieurs aux maxima trouvés pour des échos réels, le repérage du plus grand des maxima ne conduit pas nécessairement à la localisation de l'écho utile. La méthode MUSIC permet de lever l'ambiguïté introduite par les échos fictifs lorsque l'on se focalise sur une plage restreinte de variation du retard $\tau$ centrée sur celle prédéterminée par la transformée de Fourier inverse.

La figure 4 montre l'allure de la variation de l'inverse de la projection du vecteur modèle sur le sous-espace bruit $E_b$ en fonction du retard $\tau$ avec ses maxima correspondant à des échos réels et fictifs. La limitation à la plage déterminée $[\tau_f - {}^1/_2 B,\ \tau_f + {}^1/_2 B]$ par la transformée de Fourier enlève toute incertitude sur le maximum correspondant à l'écho utile de la surface du liquide.

La figure 5 illustre l'architecture du traitement effectué dans le circuit de traitement 64 de la figure 2 qui est à base de calculateurs. Les échantillons $x_{rk}$ et $y_{rk}$ des composantes en phase et en quadrature des signaux $r_k$ fournis par les convertisseurs analogique-numérique 62, 63 sont moyennés sur la durée de chaque signaux d'émission $s_k$ puis mémorisés sur la durée d'émission de la suite des signaux $s_k$. Une fois mémorisés, ils sont utilisés pour effectuer une transformée de Fourier discrète et inverse, et pour mettre en oeuvre une méthode haute résolution MUSIC.

La transformée de Fourier discrète et inverse localise grossièrement l'écho utile en situant le retard $\tau_f$ sur lequel est centré son filtre délivrant le signal de sortie de puissance maximale.

La mise en oeuvre de la méthode haute résolution MUSIC permet d'affiner la localisation de l'écho utile. Elle consiste à construire un vecteur d'observation $X_p(k)$ de dimension $p$ de l'ordre du double du nombre maximum d'échos attendus, à établir l'estimée $\hat{\Gamma}_p$ de la matrice d'autocorrélation de ce vecteur d'observation, à calculer les valeurs propres et vecteurs propres de cette estimée, à retenir les vecteurs propres correspondant à des valeurs propres faibles voisines de la puissance moyenne de bruit pour définir un sous-espace bruit $E_b$, à projeter un vecteur modèle $a_p(\tau)$ sur le sous-espace de bruit $E_b$, à rechercher dans une plage étroite de variation autour du retard $\tau_f$ donné par la transformée de Fourier, le retard $\tau_m$ correspondant au maximum de l'inverse de la projection du vecteur modèle $a_p(\tau)$ sur le sous-espace bruit $E_b$ et à adopter cette valeur $\tau_m$ comme valeur $\tau_0$ du retard de l'écho utile.

Une fois la valeur $\tau_0$ du retard de l'écho utile déterminée, le circuit de traitement en tire la mesure de la distance $d_A$ du radar à la surface de liquide par la relation :

$$d_A = \frac{c\,\tau_0}{2}$$

puis convertit cette valeur de distance en une valeur de niveau qu'il communique à l'afficheur.

A la place de la méthode MUSIC, on peut envisager d'autres méthodes à haute résolution telles que les méthodes autorégressives, décrites dans l'article Proceeding of the IEEE vol.69 n°11 nov.81 pages 1380 et suivantes de S.M.Kay et S.L.Marple.

De la même façon que précédemment, ces méthodes visent à rechercher dans une plage réduite un modèle adapté aux observations. L'avantage de ces méthodes est leur facilité d'implémentation sous forme de filtres adaptatifs autorégressifs.

Le procédé de mesure de distance à l'aide d'un radar qui vient d'être décrit dans le cadre d'une mesure de niveau de cuve s'applique à chaque fois qu'il s'agit de mesurer avec un radar la distance d'un objet dans un environnement complexe renvoyant avec l'écho de l'objet des échos parasites moins puissants brouillant la mesure. Un autre exemple d'application est celui du contrôle de trafic de véhicules à l'aide de radars situés sur des portiques surplombant des voies de circulation ou dans les tunnels car les échos radar des véhicules sont brouillés par des échos radar parasites du sol ou des parois des tunnels.

**Revendications**

1.  Procédé de mesure de distance à l'aide d'un radar dans lequel :

- on dispose le radar de manière que l'obstacle utile dont on veut mesurer la distance retourne l'écho le plus puissant,
- on fait émettre par le radar une suite de signaux hyperfréquence non modulés $\{s_k\}$ dont les pulsations discrètes sont régulièrement réparties dans une bande de fréquence balayée B

$$s_k = u\exp[j(w_0 + k\Delta w)t]$$

$u$ étant un coefficient d'amplitude, $w_0$ une pulsation initiale, $\Delta w$ le changement de pulsation au passage d'un signal à l'autre, $t$ la variable temps, $k$ un entier positif variant de 0 et N-1, N étant le nombre d'éléments d'une suite de signaux,

- on fait démoduler par le radar les signaux reçus en retour par les signaux émis pour engendrer en bande vidéo une suite de signaux $\{r_k\}$ de la forme :

$$r_k = \sum_{i=0}^{M-1} v_i \exp\left[-j\left(w_0 + k\,\Delta w\right)\tau_i\right]$$

M étant un entier représentant le nombre d'obstacles utile et parasites retournant des échos, $v_i$ un coefficient d'amplitude dépendant du coefficient de réflexion du $i^{\text{ème}}$ obstacle et $\tau_i$ le retard ou temps mis par le signal émis par le radar pour aller au $i^{\text{ème}}$ obstacle et en revenir, l'obstacle d'indice 0 étant l'obstacle utile, et

- on traite la suite des signaux reçus et démodulés $\{r_k\}$ pour en extraire la valeur du retard $\tau_0$ et en déduire la distance $d_A$ du radar à l'obstacle utile à l'aide de la relation:

$$d_A = \frac{\tau_{0} \cdot c}{2}$$

$c$ étant la vitesse de propagation des ondes du radar.

ledit procédé étant caractérisé en ce que le traitement de la suite des signaux reçus et démodulés $\{r_k\}$ consiste :

- en une transformée de Fourier discrète et inverse permettant une localisation temporelle grossière de l'écho utile par sélection du filtre de sortie donnant la réponse la plus forte,
- en une mise en oeuvre d'une méthode haute résolution pour la localisation de sources rayonnantes donnant une localisation temporelle d'échos réels et fictifs,
- en une sélection, dans la localisation temporelle d'échos fournie par la méthode haute résolution, d'une plage temporelle restreinte centrée sur le filtre de sortie sélectionné de la transformée de Fourier discrète et inverse,
- en un choix, dans ladite plage restreinte de l'écho donnant la plus forte réponse comme étant celui de l'obstacle utile et en l'adoption de son retard comme valeur du retard $\tau_0$, et
- en une estimation de la distance $d_A$ de l'obstacle utile à l'aide de la relation :

$$d_A = \frac{\tau_0 \cdot c}{2}$$

2. Procédé selon la revendication 1, caractérisé en ce que ladite plage temporelle restreinte centrée sur le filtre de sortie sélectionné de la transformée discrète et inverse a pour largeur l'inverse 1/B de la bande de fréquence balayée par la suite des signaux hyperfréquence d'émission.

3. Procédé selon la revendication 1, caractérisé en ce que la méthode haute résolution pour la localisation de sources rayonnantes est la méthode MUSIC.

4. Dispositif radar de mesure de distance d'un obstacle utile qui est entouré d'obstacles parasites et qui retourne un écho plus puissant que ceux des obstacles parasites, comportant :

- des moyens d'émission (50, 51) engendrant une suite de signaux hyperfréquence non modulés $\{s_k\}$ dont les pulsations discrètes sont régulièrement réparties dans une bande de fréquence balayée B

$$s_k = u\exp[j(w_0 + k\Delta w)t]$$

$u$ étant un coefficient d'amplitude, $w_0$ une pulsation initiale, $\Delta_w$ le changement de pulsation d'un signal à l'autre, $t$ la variable temps, $k$ un entier positif variant de 0 à N-1, N étant le nombre d'éléments d'une suite de signaux,

- des moyens de réception et de démodulation (60, 61) recevant les signaux retournés en écho par les obstacles utile et parasites, et les démodulant par les signaux émis pour engendrer en bande de base une suite de signaux $\{r_k\}$ de la forme

$$r_k = \sum_{i=0}^{M-1} v_i \exp\left[-j\left(w_0 + k\,\Delta w\right)\tau_i\right]$$

M étant un entier représentant le nombre d'obstacles utile et parasites retournant des échos, $v_i$ un coefficient d'amplitude dépendant du coefficient de réflexion du $i^{\text{ème}}$ obstacle et $\tau_i$ le retard ou temps mis par le signal émis par le radar pour aller au $i^{\text{ème}}$ obstacle et en revenir, l'obstacle d'indice 0 étant la surface du liquide, et

- des moyens de traitement (64) extrayant de la suite des signaux reçus et démodulés $\{r_k\}$ la valeur $\tau_0$ du retard de l'écho de l'obstacle utile et en déduisant la distance $d_A$ du radar à l'obstacle utile à l'aide de la relation :

$$d_A = \tau_0 \cdot c/2$$

$c$ étant la vitesse de propagation des ondes du radar,

ledit dispositif radar étant caractérisé en ce que lesdits moyens de traitement (64) comportent :

- des moyens de mise en oeuvre d'une transformation de Fourier discrète et inverse sur la suite des signaux reçus et démodulés $\{r_k\}$,
- des moyens de sélection du filtre de sortie des moyens de mise en oeuvre de transformation de Fourier donnant la réponse la plus forte,
- des moyens de mise en oeuvre d'une méthode haute résolution pour la localisation de sources rayonnantes opérant sur la suite des signaux reçus et démodulés $\{r_k\}$ et donnant une localisation temporelle d'échos réels et fictifs,
- des moyens de limitation de la localisation temporelle d'échos réels et fictifs à une plage temporelle restreinte centrée sur le filtre de sortie sélectionné des moyens de mise en oeuvre de transformation de Fourier,
- des moyens de discrimination de l'écho donnant la réponse la plus forte dans la plage restreinte de la localisation temporelle d'échos adoptant le retard de cet écho comme celui $\tau_0$ de l'obstacle utile, et
- des moyens d'estimation de la distance $d_A$ de l'obstacle utile mettant en oeuvre la relation :

$$d_A = \tau_0 \cdot c/2$$

FIG.1

FIG.2

EP 0 676 649 A1

**FIG.3**

**FIG.4**

FIG.5

EP 0 676 649 A1

Office européen
des brevets

**RAPPORT DE RECHERCHE EUROPEENNE**

Numero de la demande

EP 95 40 0747

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 575 221 (THOMSON-CSF)<br>* abrégé *<br>* page 2, ligne 57 - page 7, ligne 14; figures 1-4 *<br>--- | 1,4 | G01S13/24 |
| A | US-A-4 450 444 (WEHNER ET AL.)<br>* abrégé *<br>* colonne 3, ligne 53 - colonne 9, ligne 3; figures 1-10 *<br>--- | 1,4 | |
| A,D | L'ONDE ELECTRIQUE,<br>vol.64, no.4, 7 Août 1984, PARIS , FRANCE<br>pages 28 - 37<br>GEORGES BIENVENU ET LAURENT KOPP 'Methodes haute resolution pour la localisation de sources rayonnantes'<br>--- | 1,4 | |
| A | EP-A-0 574 282 (SOCIETE D'ETUDES DE TELE-INFORMATIQUES ET COMMUNICATIONS SYSTEME DITE SETICS SOCIETE ANONYME)<br>* abrégé *<br>* page 3, colonne 4, ligne 1 - page 8, colonne 13, ligne 38; figures 1-14 *<br>----- | 1,4 | **DOMAINES TECHNIQUES RECHERCHES (Int.Cl.6)**<br><br>G01S |

Le présent rapport a été établi pour toutes les revendications

| Lieu de la recherche | Date d'achèvement de la recherche | Examinateur |
|---|---|---|
| LA HAYE | 29 Juin 1995 | Blondel, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)